# EUROPÄISCHE PATENTSCHRIFT

(11) **EP 2 982 834 B1**
(45) Veröffentlichungstag und Bekanntmachung des Hinweises auf die Patenterteilung: **28.06.2017**
(21) Anmeldenummer: 15178555.7
(22) Anmeldetag: 28.07.2015
(51) Int. Cl.: F01D 17/16, F16C 33/36, F16C 19/46

(54) **WÄLZLAGER, INSBESONDERE NADELLAGER, ZUR ANORDNUNG AN EINEM DREHZAPFEN EINER VARIABLEN LEITSCHAUFEL EINER STRÖMUNGSMASCHINE**
ROLLER BEARING, IN PARTICULAR NEEDLE BEARING, TO BE MOUNTED ON A ROTATING PIN OF A VARIABLE GUIDE BLADE OF A TURBO ENGINE
PALIER A ROULEMENT, EN PARTICULIER PALIER A AIGUILLES, DESTINE A L'AGENCEMENT SUR UN PIVOT D'UNE AUBE VARIABLE DE TURBOMACHINE

(30) Priorität: 07.08.2014 DE 102014215623
(43) Veröffentlichungstag der Anmeldung: 10.02.2016
(73) Patentinhaber: MTU Aero Engines AG, 80995 München (DE)
(72) Erfinder: Böck, Alexander, 82288 Kottgeisering (DE)

(56) Entgegenhaltungen:
- WO-A2-01/25645
- JP-A- 2000 179 555
- US-A- 5 836 701

## Beschreibung

Die Erfindung betrifft ein Wälzlager der im Oberbegriff des Anspruchs 1 angegebenen Art. Weiterhin betrifft die Erfindung eine variable Leitschaufel, ein Gehäuse einer Strömungsmaschine sowie eine Strömungsmaschine.

Variable Leitschaufeln in einer Strömungsmaschine, beispielsweise in einer Turbine eines Flugtriebwerks, ermöglichen es, die Schluckfähigkeit dieser Strömungsmaschine zu verändern. Dadurch kann die Strömungsmaschine besser für unterschiedliche Betriebspunkte abgestimmt werden, wodurch der Wirkungsgrad steigt und beispielsweise der Treibstoffverbrauch gesenkt wird.

Ein Problem beispielsweise bei Flugzeugturbinen stellt dabei die Lagerung der variablen Leitschaufeln dar, deren Dichtheit für etwa 25.000 Flugzyklen sichergestellt sein muss. Aus der DE 1931044 A ist es beispielsweise bekannt, Drehzapfen von verstellbaren Leitschaufeln über eine Kombination eines Rollenlagers und eines Gleit- oder Kugellagers verdrehbar am Gehäuse einer Turbomaschine zu lagern. Außerdem sind Wälzlager mit variablem Durchmesser aus der WO-0125645 bekannt. Wegen der hohen Temperaturen und Temperaturgradienten während des Betriebs der zugeordneten Strömungsmaschine neigen solche Gleitlager aber bereits nach relativ wenigen Zyklen zum "Fressen", während sich Rollenlager häufig verspannen und dadurch selbst beschädigen oder sogar zerstören. Dies kann nur mit vergleichsweise großem Lagerspiel kompensiert werden, was jedoch zu hohen Leckagen und dementsprechend niedrigen Wirkungsgraden führt.

Aufgabe der vorliegenden Erfindung ist es, ein Lager für variable Leitschaufeln von Strömungsmaschinen bereitzustellen, welches auch bei starken Temperaturschwankungen eine präzise Führung einer zugeordneten Welle sicherstellt. Weitere Aufgaben der Erfindung bestehen darin, eine Leitschaufel mit einem solchen Lager, ein Gehäuse einer Strömungsmaschine mit entsprechend gelagerten Leitschaufeln sowie eine Strömungsmaschine mit derart gelagerten Leitschaufeln bereitzustellen.

Die Aufgaben werden erfindungsgemäß durch ein Wälzlager mit den Merkmalen des Anspruchs 1, eine Leitschaufel gemäß Anspruch 10, ein Gehäuse mit dem Merkmalen des Anspruchs 11 sowie durch eine Strömungsmaschine gemäß Anspruch 15 gelöst. Vorteilhafte Ausgestaltungen mit zweckmäßigen Weiterbildungen der Erfindung sind in den jeweiligen Unteransprüchen angegeben.

Ein erfindungsgemäßes Lager, welches auch bei starken Temperaturschwankungen eine präzise Führung einer zugeordneten Welle sicherstellt, ist gemäß einem ersten Aspekt der Erfindung als Wälzlager, nämlich Nadellager, ausgebildet und umfasst wenigstens eine radial elastische Nadel, die zwei gegenüberliegende Endbereiche und mindestens einen zwischen den Endbereichen angeordneten und im Querschnitt verdickt ausgebildeten Wälzbereich aufweist. Die Endbereiche rollen dabei an zugeordneten Laufbahnen eines Lagergehäuses des Wälzlagers ab, während der Wälzbereich im Bereich einer zugeordneten Nut des Lagergehäuses angeordnet ist. Hierdurch ist eine radial elastische Lagerung geschaffen, welche durch eine elastische Verformung der Nadel auch große Temperaturunterschiede und Toleranzen zwischen dem Lagergehäuse, das auch als Lagerbuchse bezeichnet werden kann, und einer zugeordneten Welle, insbesondere einem Drehzapfen einer Leitschaufel, ausgleichen kann. Durch die präzise Führung einer zugeordneten Welle werden auch weitere Elemente wie beispielsweise Wellendichtungen geschont und damit deren Dichtigkeit erhalten. Die Elastizität und radiale Verformbarkeit der Nadel wird mit anderen Worten dadurch erreicht, dass die Nadel einerseits an beiden Enden auf- bzw. am Lagergehäuse anliegt, andererseits aber entlang einer Nut des Lagergehäuses verläuft, so dass sich der Wälzbereich der Nadel unter elastischer Verformung der Nadel in diese Nut hinein- oder aus dieser Nut herausbewegen kann. Durch die Möglichkeit des elastischen Nachgebens der Nadel ist in allen Betriebspunkten und auch während transienter Übergänge einer zugeordneten Strömungsmaschine, bei denen besonders große Temperaturunterschiede auftreten, eine zumindest weitgehende spielfreie Lagerung einer zugeordneten Leitschaufel gewährleistet. Außerdem ist nur ein sehr geringer Lagerverschleiß ohne "Fressen" durch die hauptsächlich auftretenden Rollbewegungen der Nadel gegeben. Das erfindungsgemäße Wälzlager ermöglicht daher eine wesentlich dichtere und haltbarerer Lagerung von Leitschaufeln als bisherige Lager oder Lagerkombinationen.

In einer vorteilhaften Ausgestaltung der Erfindung ist die Nut derart ausgebildet, dass wenigstens ein Wälzbereich bei verspannungsfreier Nadel nicht am Lagergehäuse anliegt. Mit anderen Worten ist es vorgesehen, dass zwischen einer Wand der Nut und dem Wälzbereich der Nadel im Fall einer kraftfreien bzw. unverformten Nadel ein vorbestimmter Abstand gegeben ist. Hierdurch ist sichergestellt, dass sich die Nadel nur im Fall einer Verspannung bzw. Kraft- oder Temperaturbeaufschlagung elastisch in die Nut hineinverformt, bis der Wälzbereich an der Wand der Nut anliegt. Durch den Abstand zwischen der Wand der Nut und dem Wälzbereich bei unverspannter Nadel kann die maximal zulässige Verformung der Nadel besonders einfach eingestellt werden.

Weitere Vorteile ergeben sich, wenn wenigstens ein Wälzbereich in der Mitte der Nadel ausgebildet ist. Hierdurch wird im Fall eines radialen Verbiegens der Nadel eine besonders symmetrische Kraftverteilung über die Nadel erreicht, wodurch die Haltbarkeit des Wälzlagers weiter gesteigert wird.

In einer weiteren vorteilhaften Ausgestaltung der Erfindung beträgt eine axiale Länge des Wälzbereichs zwischen 5 % und 50 % der Gesamtlänge der Nadel. Mit anderen Worten weist der Wälzbereich eine axiale Erstreckung auf, die 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 % oder 50 % der axialen Gesamterstreckung der Nadel entspricht. Hierdurch kann die zwischen den Endbereichen befindliche Anlagefläche der Nadel optimal an die jeweiligen Gegebenheiten und Anforderungen angepasst werden. Alternativ oder zusätzlich ist es erfindungsgemäß vorgesehen, dass eine mittlere Querschnittsdicke des Wälzbereichs zwischen 105 % und 180 % der mittleren Querschnittsdicke der Nadel beträgt. Mit anderen Worten ist es vorgesehen, dass der Querschnitt des Wälzbereichs im Mittel 105 %, 106 %, 107 %, 108 %, 109 %, 110 %, 111 %, 112 %, 113 %, 114 %, 115 %, 116 %, 117 %, 118 %, 119 %, 120 %, 121 %, 122 %, 123 %, 124 %, 125 %, 126 %, 127 %, 128 %, 129 %, 130 %, 131 %, 132 %, 133 %, 134 %, 135 %, 136 %, 137 %, 138 %, 139 %, 140 %, 141 %, 142 %, 143 %, 144 %, 145 %, 146 %, 147 %, 148 %, 149 %, 150 %, 151 %, 152 %, 153 %, 154 %, 155 %, 156 %, 157 %, 158 %, 159 %, 160 %, 161 %, 162 %, 163 %, 164 %, 165 %, 166 %, 167 %, 168 %, 169 %, 170 %, 171 %, 172 %, 173 %, 174 %, 175 %, 176 %, 177 %, 178 %, 179 % oder 180 % der mittleren Querschnittsdicke der Nadel besitzt. Unter der mittleren Querschnittsdicke der Nadel ist dabei die mittlere Querschnittsdicke derjenigen Bereiche der Nadel zu verstehen, die nicht zum Wälzbereich zählen. Hierdurch können einerseits das Biegeverhalten und andererseits die maximal zulässige Biegung der Nadel eingestellt werden.

Weitere Vorteile ergeben sich, indem der Wälzbereich zumindest im Wesentlichen zylindrisch oder ballig ausgebildet ist. Dies erlaubt eine einfache Anpassung der Wälzfläche der Nadel an die geometrische Ausgestaltung der Nut des Lagergehäuses.

Dabei kann es in weiterer Ausgestaltung der Erfindung vorgesehen sein, dass die Nadel mindestens zwei voneinander beabstandete Wälzbereiche aufweist. Hierdurch weist die Nadel zwischen ihren Enden zwei oder mehr Anlageflächen auf, wodurch eine besonders präzise Einstellbarkeit des Biegeverhaltens der Nadel ermöglicht ist. Die wenigstens zwei Wälzbereiche können dabei grundsätzlich die gleiche Querschnittsdicken oder unterschiedliche Querschnittsdicken und/oder gleiche oder unterschiedliche Querschnittsgeometrien aufweisen.

In einer weiteren vorteilhaften Ausgestaltung der Erfindung ist die Nadel in einem Käfig des Lagergehäuses geführt, der eine relative Bewegbarkeit der Nadel gegenüber dem Lagergehäuse begrenzt. Auf diese Weise wird die Nadel präzise im Lagergehäuse geführt und gegen ein Herausfallen gesichert.

Weitere Vorteile ergeben sich, wenn dem Lagergehäuse ein Isolierungselement zur Wärmedämmung zugeordnet ist. Auch hiermit kann die Lebensdauer des Wälzlagers insbesondere bei einem Einsatz in Strömungsmaschinen mit starken Temperaturbelastungen und Temperaturschwankungen vorteilhaft gesteigert werden. Das Isolierungselement kann das Lagergehäuse beispielsweise teilweise oder vollständig umgeben.

Eine besonders zuverlässige Lagerung wird in weiterer Ausgestaltung der Erfindung dadurch erzielt, dass das Lagergehäuse einen Nadelkranz mit mehreren ringförmig angeordneten Nadeln umfasst.

Ein zweiter Aspekt der Erfindung betrifft eine Leitschaufel einer Strömungsmaschine, mit einem Drehzapfen, an welchem wenigstens ein Wälzlager angeordnet ist. Dabei ist es erfindungsgemäß vorgesehen, dass das dabei verwendete Wälzlager gemäß dem ersten Erfindungsaspekt ausgebildet ist. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind.

Ein dritter Aspekt der Erfindung betrifft ein Gehäuse für eine Strömungsmaschine, wobei das Gehäuse wenigstens eine variable Leitschaufel umfasst, welche einen Drehzapfen aufweist, der über wenigstens ein Wälzlager verdrehbar am Gehäuse angeordnet ist. Dabei ist es erfindungsgemäß vorgesehen, dass das dabei verwendete Wälzlager gemäß dem ersten Erfindungsaspekt ausgebildet ist. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind.

In einer vorteilhaften Ausgestaltung der Erfindung ist vorgesehen, dass mindestens zwei Wälzlager in axialer Richtung des Drehzapfens übereinander am Drehzapfen der wenigstens einen Leitschaufel angeordnet sind. Auf diese Weise wird eine mechanisch und thermisch besonders belastbare Lagerung der Leitschaufel geschaffen, da anstelle eines vergleichsweise langen Wälzlagers mit entsprechend höheren Toleranzen zwei oder mehr kleinere Wälzlager mit geringeren Toleranzen verwendet werden.

Weitere Vorteile ergeben sich, indem der Drehzapfen der wenigstens einen Leitschaufel mittels einer Wellendichtung, insbesondere mittels einer Stopfbuchse, gegenüber dem Gehäuse abgedichtet ist. Damit wird die Dichtheit der gesamten Lagerung der Leitschaufel erreicht. Aufgrund der präzisen Lagerung der Leitschaufel durch das erfindungsgemäße Wälzlager ist zudem sichergestellt, dass nur sehr geringe asymmetrische Leckagespalte in der Wellendichtung entstehen, wodurch deren Dichtwirkung ebenfalls über alle Betriebspunkte einer zugeordneten Strömungsmaschine aufrecht erhalten wird.

In einer weiteren vorteilhaften Ausgestaltung der Erfindung ist vorgesehen, dass das Gehäuse ein Leitschaufelgitter mit mindestens zwei variablen Leitschaufeln umfasst. Solche verstellbaren Leitschaufelgitter gewährleisten einen zusätzlich erhöhten Wirkungsgrad der zugeordneten Strömungsmaschine.

Ein vierter Aspekt der Erfindung betrifft eine Strömungsmaschine, insbesondere ein Flugtriebwerk, welche wenigstens einer Leitschaufel gemäß dem zweiten Erfindungsaspekt und/oder ein Gehäuse gemäß dem dritten Erfindungsaspekt aufweist. Die sich hieraus ergebenden Merkmale und deren Vorteile sind den Beschreibungen des zweiten bzw. dritten Erfindungsaspekts zu entnehmen, wobei vorteilhafte Ausgestaltungen des zweiten und dritten Erfindungsaspekts als vorteilhafte Ausgestaltungen des vierten Erfindungsaspekts anzusehen sind.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt
- Fig. 1: einen schematischen Längsschnitt durch eine Strömungsmaschine;
- Fig. 2: eine vergrößerte Ansicht des in Fig. 1 gezeigten Details II;
- Fig. 3: eine schematische Seitenansicht einer Nadel eines erfindungsgemäßen Wälzlagers;
- Fig. 4: eine schematische Seitenansicht der Nadel und eines Ausschnitts eines Lagergehäuses des erfindungsgemäßen Wälzlagers;
- Fig. 5: eine schematische Seitenansicht der Nadel und eines Ausschnitts des Lagergehäuses und eines Käfigs des erfindungsgemäßen Wälzlagers; und
- Fig. 6: eine schematische Aufsicht auf einen Nadelkranz des erfindungsgemäßen Wälzlagers.

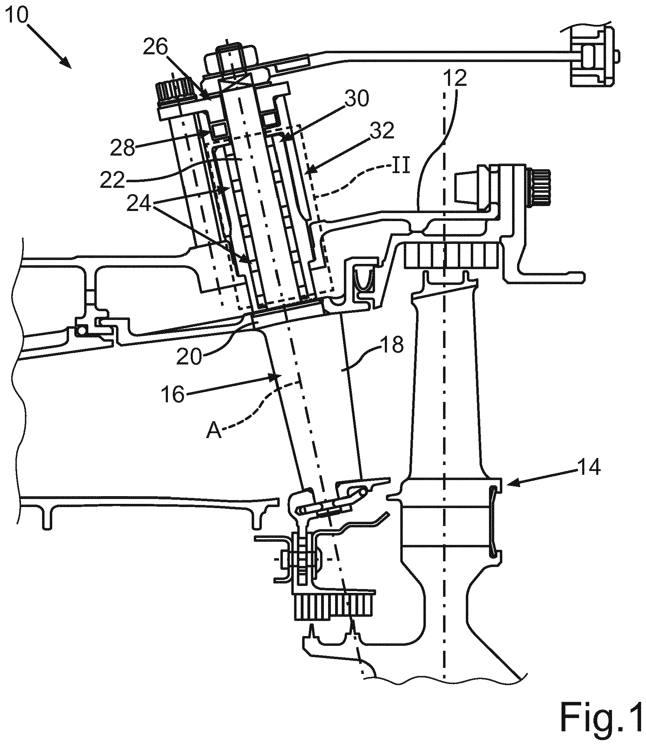

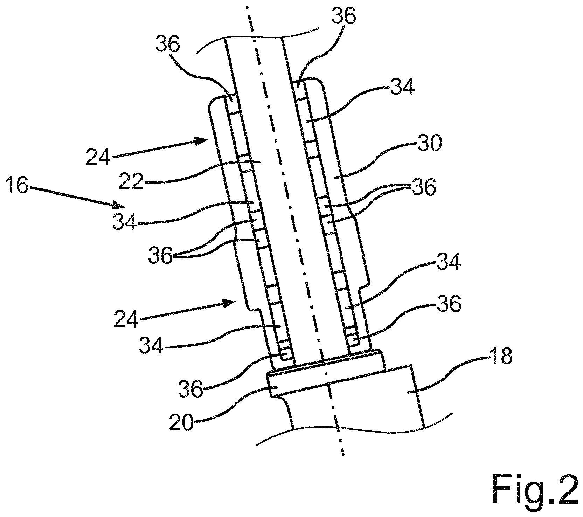

Fig. 1 zeigt einen schematischen Längsschnitt durch eine vorliegend als Flugtriebwerk ausgebildeten Strömungsmaschine 10. Der grundsätzliche Aufbau der Strömungsmaschine 10 ist dabei aus dem Stand der Technik bekannt. So umfasst diese ein Gehäuse 12, in welchem ein beschaufelter Rotor 14 angeordnet ist, der in an sich bekannter Weise um eine Drehachse rotiert. Zur Erhöhung des Wirkungsgrads der Strömungsmaschine 10 sind kranzförmig um die Drehachse des Rotors variable Leitschaufeln 16 angeordnet, die jeweils um eine radiale Achse A verstellbar bzw. verdrehbar ausgebildet sind, um die Anströmung des stromab liegenden Rotors 14 in Abhängigkeit eines Betriebspunkts der Strömungsmaschine 10 zu verändern. Die Leitschaufeln 16 sind jeweils beidenends drehbar am Gehäuse 12 gelagert. Radial oberhalb ihres Schaufelblatts 18 weist jede Leitschaufel 16 dabei einen Schaufelteller 20 und einen daran anschließenden Drehzapfen 22 auf. Der Drehzapfen 22 ist vorliegend über zwei radial übereinander angeordnete, erfindungsgemäße Wälzlager 24 drehbar am Gehäuse 12 gelagert. Dabei ist zu betonen, dass sowohl Anzahl als auch Anordnung der Wälzlager 24 lediglich beispielhaft sind. Zur Lagesicherung des Drehzapfens 22 weist das Gehäuse 12 einen Deckel 26 auf, an welchem eine vorliegend als Stopfbuchse ausgebildete Wellendichtung 28 angeordnet ist. Wie man insbesondere in Fig. 2, welche eine vergrößerte Ansicht des in Fig. 1 gezeigten Details II zeigt, erkennt, umfassen die Wälzlager 24 im gezeigten Ausführungsbeispiel ein gemeinsames Lagergehäuse 30. Es versteht sich, dass jedes Wälzlager 24 grundsätzlich ein separates Lagergehäuse 30 besitzen kann oder dass drei oder mehr Wälzlager 24 in einem gemeinsamen Lagergehäuse 30 angeordnet sein können. Dem Lagergehäuse 30 ist dabei ein grundsätzlich optionales Isolierungselement 32 zugeordnet, welches das Lagergehäuse 30 zur Wärmedämmung außenumfänglich umgibt.

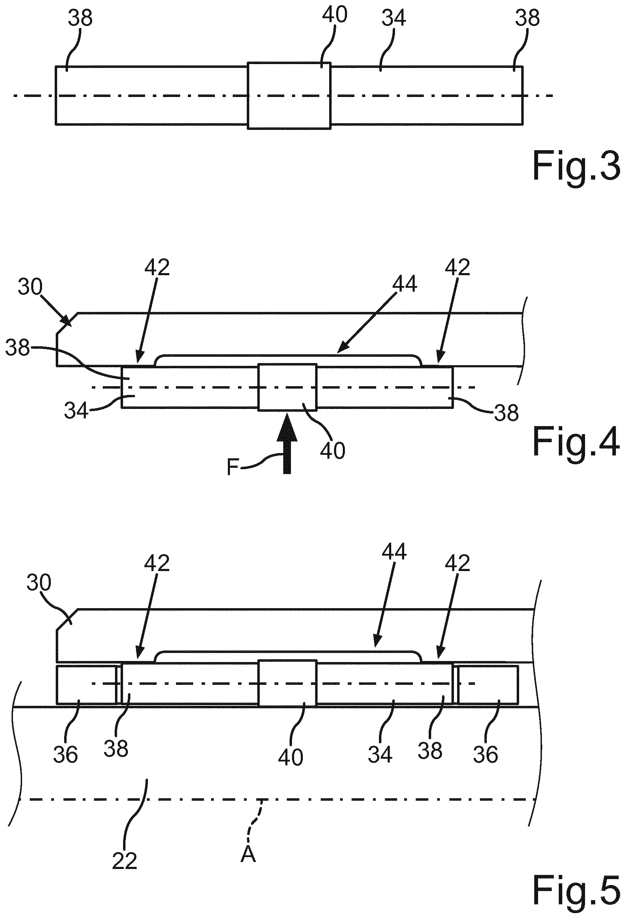

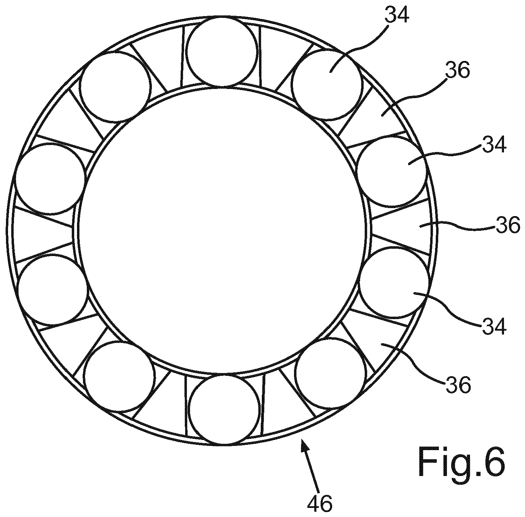

Wie man ebenfalls in Fig. 2 erkennt, weist jedes Wälzlager 24 mehrere radial elastische Nadeln 34 auf, die in Form eines Nadelkranzes 46 (s. Fig. 6) in einem jeweiligen Käfig 36 des gemeinsamen Lagergehäuses 30 geführt sind. Zur näheren Verdeutlichung zeigt Fig. 3 eine schematische Seitenansicht einer Nadel 34 im kraftfreien Zustand. Fig. 3 wird im Folgenden in Zusammenschau mit Fig. 4 und Fig. 5 erläutert werden, wobei Fig. 4 eine schematische Seitenansicht der Nadel 34 sowie einen Ausschnitt des Lagergehäuses 30 zeigt, während Fig. 5 eine schematische Seitenansicht der Nadel 34, eines Ausschnitts des Lagergehäuses 30 und des Käfigs 36 des erfindungsgemäßen Wälzlagers 24 zeigt.

Man erkennt, dass jede Nadel 34 rotationssymmetrisch ausgebildet ist und zwei gegenüberliegende Endbereiche 38 sowie einen zwischen den Endbereichen 38 angeordneten und im Querschnitt verdickt ausgebildeten Wälzbereich 40 aufweist. Der Wälzbereich 40 ist vorliegend in der Mitte der Nadel 34 angeordnet und zylindrisch ausgebildet. Eine axiale Länge des Wälzbereichs beträgt dabei etwa 20 % der Gesamtlänge der Nadel, während eine mittlere Querschnittsdicke des Wälzbereichs etwa 110 % der mittleren Querschnittsdicke der Nadel 34 beträgt bzw. etwa 10% dicker als der Rest der Nadel 34 ist.

Wie man in Fig. 4 und Fig. 5 sieht, rollen die Endbereiche 38 an zugeordneten Laufbahnen 42 des Lagergehäuses 30 ab, während der Wälzbereich 40 im Bereich einer zugeordneten Nut 44 des Lagergehäuses 30 angeordnet ist. Form und Tiefe der Nut 44 sowie die Querschnittsdicke des Wälzbereichs 40 definieren dabei die maximale Biegung der Nadel 34. Dabei kann sich der Wälzbereich 40 aufgrund der schematisch angedeuteten Kraft F sowie aufgrund etwaiger Längenänderungen der Nadel 34 in die Nut 44 hineinbewegen, bis er am Lagergehäuse 30 anliegt oder bis die Endbereiche 38 der Nadel 34 wegen der Durchbiegung der Nadel 34 an dem Drehzapfen 22 anliegen bzw. am Drehzapfen 22 abrollen. Durch das elastische Nachgeben der Nadeln 34 ist in allen Betriebspunkten der Strömungsmaschine 10 und auch während transienter Übergänge, bei denen besonders große Temperaturunterschiede auftreten, eine nahezu spielfreie Lagerung der Leitschaufeln 16 sichergestellt. Der in Fig. 5 und Fig. 6 erkennbare Käfig 36 begrenzt dabei die Relativbewegung der Nadeln 34 gegenüber dem Lagergehäuse 30. Mit Hilfe der Wälzlager 24 wird das Entstehen asymmetrischer Leckagespalte in der Wellendichtung 28 vermieden, wodurch deren Dichtheit ebenfalls verbessert wird. Außerdem ist ein extrem geringer Lagerverschleiß ohne "Fressen" durch die hauptsächlich auftretenden Rollbewegungen der Nadeln 34 sichergestellt. Das erfindungsgemäße Wälzlager 24 ermöglicht daher eine dichtere und dauerhaftere Lagerung von Leitschaufeln 16 als bisherige Lösungen.

Fig. 6 zeigt eine schematische Aufsicht auf die in Form eines Nadelkranzes 46 angeordneten und mittels des Käfigs 36 lagegesicherten Nadeln 34 des erfindungsgemäßen Wälzlagers 24, wobei im gezeigten Beispiel zehn Nadeln 34 pro Wälzlager 24 vorgesehen sind. Je nach Einsatzzweck und Größe des Wälzlagers 24 können natürlich auch mehr oder weniger Nadeln 34 vorgesehen sein.

### Bezugszeichenliste:

- 10: Strömungsmaschine
- 12: Gehäuse
- 14: Rotor
- 16: Leitschaufel
- 18: Schaufelblatt
- 20: Schaufelteller
- 22: Drehzapfen
- 24: Wälzlager
- 26: Deckel
- 28: Wellendichtung
- 30: Lagergehäuse
- 32: Isolierungselement
- 34: Nadel
- 36: Käfig
- 38: Endbereich
- 40: Wälzbereich
- 42: Laufbahn
- 44: Nut
- 46: Nadelkranz

## Patentansprüche

1. Wälzlager (24), nämlich Nadellager, zur Anordnung an einem Drehzapfen (22) einer variablen Leitschaufel (16) einer Strömungsmaschine (10),
**dadurch gekennzeichnet, dass**
dieses wenigstens eine radial elastische Nadel (34) umfasst, welche zwei gegenüberliegende Endbereiche (38) und mindestens einen zwischen den Endbereichen (38) angeordneten und im Querschnitt verdickt ausgebildeten Wälzbereich (40) aufweist, wobei die Endbereiche (38) an zugeordneten Laufbahnen (42) eines Lagergehäuses (30) des Wälzlagers (24) abrollen und der Wälzbereich (40) im Bereich einer zugeordneten Nut (44) des Lagergehäuses (30) angeordnet ist.

2. Wälzlager (24) nach Anspruch 1,
**dadurch gekennzeichnet, dass**
wenigstens ein Wälzbereich (40) bei verspannungsfreier Nadel (34) nicht am Lagergehäuse (30) anliegt.

3. Wälzlager (24) nach Anspruch 1 oder 2,
**dadurch gekennzeichnet, dass**
wenigstens ein Wälzbereich (40) in der Mitte der Nadel (34) ausgebildet ist.

4. Wälzlager (24) nach einem der Ansprüche 1 bis 3,
**dadurch gekennzeichnet, dass**
eine axiale Länge des Wälzbereichs (40) zwischen 5 % und 50 % der Gesamtlänge der Nadel (34) beträgt und/oder dass eine mittlere Dicke des Wälzbereichs (40) zwischen 105 % und 180 % der mittleren Dicke der Nadel (34) beträgt.

5. Wälzlager (24) nach einem der Ansprüche 1 bis 4,
**dadurch gekennzeichnet, dass**
der Wälzbereich (40) zumindest im Wesentlichen zylindrisch oder ballig ausgebildet ist.

6. Wälzlager (24) nach einem der Ansprüche 1 bis 5,
**dadurch gekennzeichnet, dass**
die Nadel (34) mindestens zwei voneinander beabstandete Wälzbereiche (40) aufweist.

7. Wälzlager (24) nach einem der Ansprüche 1 bis 6,
**dadurch gekennzeichnet, dass**
die Nadel (34) in einem Käfig (36) des Lagergehäuses (30) geführt ist, der eine relative Bewegbarkeit der Nadel (34) gegenüber dem Lagergehäuse (30) begrenzt.

8. Wälzlager (24) nach einem der Ansprüche 1 bis 7,
**dadurch gekennzeichnet, dass**
dem Lagergehäuse (30) ein Isolierungselement (32) zur Wärmedämmung zugeordnet ist.

9. Wälzlager (24) nach einem der Ansprüche 1 bis 8,
**dadurch gekennzeichnet, dass**
das Lagergehäuse (30) einen Nadelkranz (46) mit mehreren ringförmig angeordneten Nadeln (34) umfasst.

10. Leitschaufel (16) einer Strömungsmaschine (10), mit einem Drehzapfen (22), an welchem wenigstens ein Wälzlager (24) angeordnet ist,
**dadurch gekennzeichnet, dass**
das Wälzlager (24) gemäß einem der Ansprüche 1 bis 9 ausgebildet ist.

11. Gehäuse (12) für eine Strömungsmaschine (10), mit wenigstens einer variablen Leitschaufel (16), welche einen Drehzapfen (22) aufweist, der über wenigstens ein Wälzlager (24) verdrehbar am Gehäuse (12) angeordnet ist,
**dadurch gekennzeichnet, dass**
das Wälzlager (24) gemäß einem der Ansprüche 1 bis 9 ausgebildet ist.

12. Gehäuse (12) nach Anspruch 11,
**dadurch gekennzeichnet, dass**
mindestens zwei Wälzlager (24) in axialer Richtung des Drehzapfens (22) übereinander am Drehzapfen (22) der wenigstens einen Leitschaufel (16) angeordnet sind.

13. Gehäuse (12) nach Anspruch 11 oder 12,
**dadurch gekennzeichnet, dass**
der Drehzapfen (22) der wenigstens einen Leitschaufel (16) mittels einer Wellendichtung (28), insbesondere mittels einer Stopfbuchse, gegenüber dem Gehäuse (12) abgedichtet ist.

14. Gehäuse (12) nach einem der Ansprüche 11 bis 13,
**dadurch gekennzeichnet, dass**
dieses ein Leitschaufelgitter mit mindestens zwei variablen Leitschaufeln (16) umfasst.

15. Strömungsmaschine (10), insbesondere Flugtriebwerk, mit wenigstens einer Leitschaufel (16) gemäß Anspruch 10 und/oder mit einem Gehäuse (12) nach einem der Ansprüche 11 bis 14.

## Claims

1. A roller bearing (24), specifically a needle bearing, to be arranged on a rotating pin (22) of a a variable guide blade (16) of a turbo engine (10),
**characterized in that**
it comprises at least one radially elastic needle (34) that has two opposite end regions (38) and at least one rolling region (40) arranged between the end regions (38) and having a thickened configuration in the cross section, the end regions (38) rolling on assigned races (42) of a bearing housing (30) of the roller bearing (24), and the rolling region (40) being arranged in the area of an assigned groove (44) of the bearing housing (30).

2. The roller bearing (24) according to claim 1,
**characterized in that**
at least one rolling region (40) does not rest against the bearing housing (30) when the needles (34) are free of twisting.

3. The roller bearing (24) according to claim 1 or 2,
**characterized in that**
at least one rolling region (40) is formed in the center of the needle (34).

4. The roller bearing (24) according to any of claims 1 to 3,
**characterized in that**
an axial length of the rolling region (40) is between 5% and 50% of the overall length of the needle (34) and/or that a mean thickness of the roller area (40) is between 105% and 180% of the mean thickness of the needle (34).

5. The roller bearing (24) according to any of claims 1 to 4,
**characterized in that**
the rolling region (40) is designed to be at least essentially cylindrical or crowned.

6. The roller bearing (24) according to any of claims 1 to 5,
**characterized in that**
the needle (34) has at least two rolling regions (40) that are spaced apart from each other.

7. The roller bearing (24) according to any of claims 1 to 6,
**characterized in that**
the needle (34) is guided within a cage (36) of the bearing housing (30) that limits a relative mobility of the needle (34) with respect to the bearing housing (30).

8. The roller bearing (24) according to any of claims I to 7,
**characterized in that**
an insulating element (32) is assigned to the bearing housing (30) for thermal insulation.

9. The roller bearing (24) according to any of claims 1 to 8,
**characterized in that**
the bearing housing (30) comprises a needle roller assembly (46) having a plurality of annularly arranged needles (34).

10. A guide blade (16) of a turbo engine (10) comprising a rotating pin (22) on which at least one roller bearing (24) is arranged,
**characterized in that**
the roller bearing (24) is designed according to any of claims 1 to 9.

11. A housing (12) for a turbo machine (10) comprising at least one variable guide blade (16), which has a rotating pin (22) that is rotatably arranged on the housing (12) via at least one roller bearing (24),
**characterized in that**
the roller bearing (24) is designed according to any of claims 1 to 9.

12. The housing (12) according to claim 11,
**characterized in that**
at least two roller bearings (24) are arranged one over the other in the axial direction of the rotating pin (22) on the rotating pin (22) of the at least one guide blade (16).

13. The housing (12) according to claim 11 or 12,
**characterized in that**
the rotating pin (22) of the at least one guide blade (16) is sealed off from the housing (12) via a shaft seal (28), in particular via a gland.

14. The housing (12) according to any of claims 11 to 13,
**characterized in that**
it comprises a guide blade grid having at least two variable guide blades (16).

15. A turbo engine (10), in particular an air aircraft engine, having at least one guide blade (16) according to claim 10 and/or having a housing (12) according to any of claims 11 to 14.

## Revendications

1. Palier à roulement (24), à savoir palier à aiguilles, pour agencement sur un tourillon (22) d'une aube directrice variable (16) d'une turbomachine (10),
**caractérisé en ce que :**
il comprend au moins une aiguille radialement élastique (34) qui présente deux zones d'extrémité opposées (38) at au moins une zone de roulement (40) agencée entre les zones d'extrémité (38) et
conçue épaissie en section transversale, dans lequel les zones d'extrémité (38) se déroulent sur des voies de roulement connexes (42) d'un boîtier de palier (30) du palier à roulement (24) et
la zone de roulement (40) est agencée dans la zone d'une encoche connexe (44) du boîtier de palier (30).

2. Palier à roulement (24) selon la revendication 1,
**caractérisé en ce que :**
au moins une zone de roulement (40) ne s'applique pas sur le boîtier de palier (30) lorsque l'aiguille (31) n'est pas sous tension.

3. Palier à roulement (24) selon la revendication 1 ou 2,
**caractérisé en ce que** :
au moins une zone de roulement (40) est formée au centre de l'aiguille (34).

4. Palier à roulement (24) selon l'une quelconque des revendications 1 à 3,
**caractérisé en ce que** :
une longueur axiale de la zone de roulement (40) atteint entre 5 % et 50 % de la longueur totale de l'aiguille (34) et/ou une épaisseur moyenne de la zone de roulement (40) atteint entre 105 % et 180 % de l'épaisseur moyenne de l'aiguille (34).

5. Palier à roulement (24) selon l'une quelconque des revendications 1 à 4,
**caractérisé en ce que** :
la zone de roulement (40) est conçue au moins sensiblement en mode cylindrique ou bombé.

6. Palier à roulement (24) selon l'une quelconque des revendications 1 à 5,
**caractérisé en ce que :**
l'aiguille (34) présente au moins deux zones de roulement distantes l'une de l'autre (40).

7. Palier à roulement (24) selon l'une quelconque des revendications 1 à 6,
**caractérisé en ce que :**
l'aiguille (34) est guidée dans un logement (36) du boîtier de palier (30), qui délimite une capacité de déplacement relative de l'aiguille (34) vis-à-vis du boîtier de palier (30).

8. Palier à roulement (24) selon l'une quelconque des revendications 1 à 7,
**caractérisé en ce que :**
un élément isolant (32) est affecté au boîtier de palier (30) pour amortir la chaleur.

9. Palier à roulement (24) selon l'une quelconque des revendications 1 à 8,
**caractérisé en ce que :**
le boîtier de palier (30) comprend une couronne d'aiguilles (46) avec plusieurs aiguilles (34) agencées en mode annulaire.

10. Aube directrice (16) d'une turbomachine (10) avec un tourillon (22) sur lequel est agencé au moins un palier à roulement (24),
**caractérisée en ce que :**
le palier à roulement (24) est conçu selon l'une quelconque des revendications 1 à 9.

11. Boîtier (12) pour une turbomachine (10), avec au moins une aube directrice variable (16) qui présente un tourillon (22) qui est monté à rotation sur le boîtier (12) via au moins un palier à roulement (24),
**caractérisé en ce que** :
le palier à roulement (24) est conçu selon l'une quelconque des revendications 1 à 9.

12. Boîtier (12) selon la revendication 11,
**caractérisé en ce que :**
au moins deux paliers à roulement (24) sont agencés l'un au-dessus de l'autre dans la direction axiale du tourillon (22) sur le tourillon (22) de la au moins une aube directrice (16).

13. Boîtier (12) selon la revendication 11 ou 12,
**caractérisé en ce que** :
le tourillon (22) de la au moins une aube directrice (16) est étanché au moyen d'un joint d'arbre étanché (28), en particulier au moyen d'un presse-étoupe, vis-à-vis du boîtier (12).

14. Boîtier (12) selon l'une quelconque des revendications 11 à 13,
**caractérisé en ce que** :
il comprend un réseau d'aubes directrices avec au moins deux aubes directrices variables (16).

15. Turbomachine (10), en particulier groupe motopropulseur, avec au moins une aube directrice (16) selon la revendication 10 et/ou un boîtier (12) selon l'une quelconque des revendications 11 à 14.
